# EUROPÄISCHE PATENTSCHRIFT

(11) **EP 1 248 000 B1**
(45) Veröffentlichungstag und Bekanntmachung des Hinweises auf die Patenterteilung: **18.02.2009**
(21) Anmeldenummer: 02006644.5
(22) Anmeldetag: 26.03.2002
(51) Int. Cl.: F16B 13/12, E04F 13/08

(54) **Dübel**
Dowel
Cheville

(30) Priorität: 30.03.2001 DE 10115939
(43) Veröffentlichungstag der Anmeldung: 09.10.2002
(73) Patentinhaber: EJOT Kunststofftechnik GmbH & Co. KG, D-57319 Bad Berleburg (DE)
(72) Erfinder: Tiemann, Joachim, Dipl.-Ing., 59846 Sundern (DE)
(74) Vertreter: Heselberger, Johannes

(56) Entgegenhaltungen:
- EP-A- 0 889 249
- EP-A- 0 928 901
- DE-A- 2 840 087
- DE-A- 3 101 472
- DE-A- 3 318 800
- DE-U- 8 332 204

## Beschreibung

Die vorliegende Erfindung betrifft einen Dübel mit einem Kopf, der eine Druckplatte umfaßt und mit einem Hohlschaft, der an den Kopf anschließt, zum Einführen eines Spreizelementes, wobei der Hohlschaft mindestens einen Spreizabschnitt aufweist, wobei der Spreizabschnitt mindestens einen Längssteg zwischen zwei Auslassungen und zwei radiale Spreizzungen umfaßt, wobei der Längssteg durch jeweils eine Auslassung von jeweils einer radialen Spreizzunge getrennt ist, und wobei der Längssteg durch mindestens jeweils einen Quersteg mit radialen Spreizzungen verbunden ist.

Derartige Dübel sind seit Jahren bekannt und müssen hinsichtlich ihrer Führungs- und Befestigungseigenschaften besondere Anforderungen erfüllen, insbesondere wenn sie in unterschiedlichen Mauerwerken einsetzbar sein sollen. Derartige Dübel werden häufig an Innen- oder Außenfassaden eingesetzt und sollen beispielsweise zur Befestigung einer relativ dicken Dämmschicht dienen. Weil der Dübel diese Dämmschicht praktisch einspannen soll, ist er mit einem schirmartigen Kopf bzw. Druckplatte versehen, die die Dämmschicht an das Mauerwerk drückt, wobei der Dübel länger als die Dicke der Dämmschicht sein muß. Dadurch sind diese Dübel im Verhältnis zu den Dübeln, die man für den Hausgebrauch kennt, besonders lang.

In die Dübel können schraubenartige Spreizelemente oder nagelartige Spreizelemente eingeführt werden.

Bei den schraubenartigen Spreizelementen ergeben sich hinsichtlich der Führung relativ wenig Probleme. Das schraubenartige Spreizelement ist relativ lang und häufig nur im vorderen Bereich mit einem Schraubgewinde versehen. Da der Einführungsvorgang des Spreizelementes nicht schlagartig erfolgt, sondern durch Drehen erfolgt, findet das schraubenartige Spreizelement ohne größere Probleme seinen Weg.

Im Gegensatz hierzu können in die Dübel nagelartige Spreizelemente eingeschlagen werden. Durch das Einschlagen des nagelartigen Spreizelementes werden Spreizzonen in einem Spreizabschnitt, der im vorderen Bereich des Dübels, d.h. an dem spitzen Ende, gespreizt. Der Einschlagvorgang des Nagels ist relativ schnell und die Schlagbewegung auf den Kopf des nagelartigen Spreizelementes nicht immer genau in Führungsrichtung, so daß die Gefahr besteht, daß das Spreizelement schief eingeschlagen wird. Weil die Schlagkräfte relativ hoch und das verwendete Dübelmaterial in einem bestimmten Maß elastisch ist, sucht sich der Nagel bei ungünstigem Einschlagen einen anderen Weg in das Mauerwerk, als es für ihn vorgesehen ist.

Nicht nur hinsichtlich der Führungseigenschaften werden besondere Anforderungen gewünscht, sondern auch hinsichtlich der Befestigungs- und Halteeigenschaften. Unter Befestigungseigenschaften ist hier zu verstehen, wie der Dübel in dem Mauerwerk kraft- und formschlüssig befestigt ist oder beispielsweise Dämmplatten oder dergleichen befestigt werden.

Bekannt sind Dübel mit einem relativ kurzen Spreizabschnitt, wobei die Spreizzonen durch Spreizzungen bzw. Spreizbacken realisiert sind, wobei die Spreizbacken im gespreizten Zustand eine bauchige Form annehmen. Zwischen den Spreizbacken sind entweder Auslassungen oder Schlitze vorhanden, die ein definiertes Aufspreizen ermöglichen. Dadurch, daß der Spreizabschnitt relativ kurz ist und der zwischen dem Kopf und dem Spreizanfang liegende Bereich, der für die Führung des Spreizelementes vorgesehen ist, relativ lang ist, wird so die Gefahr eines unkontrollierten Einschlagens reduziert. Ein Nachteil dieses Dübels ist jedoch, daß er sich nur im Bereich des Mauerwerkes aufspreizen läßt. Derartige Dübel, die als Schlagdübel verwendet werden, weisen den Nachteil auf, daß bei Verwendung in einem Vollbaustoff der Kopf bzw. die Druckplatte nicht in das Isoliermaterial eingedrückt werden kann, weil der Schaft oberhalb des Mauerwerkes keine Schlitzung bzw. Spreizzone aufweist.

Die DE19800581A1 zeigt und beschreibt ein Dübelsystem, aufweisend eine Dübelhülse mit einer ersten und einer zweiten Spreizzone, insbesondere zur Anwendung bei zweischaligen Mauerwerken und ein Spreizelement mit einem Kopf und mit einem ersten Spreizabschnitt, der mit einem Gewinde versehen ist und mit einem zweiten, dem Kopf zugewandten Spreizabschnitt, wobei im montierten Zustand die erste Spreizzone mit dem ersten Spreizabschnitt und die zweite Spreizzone mit dem zweiten Spreizabschnitt und der Erzielung einer Spreizwirkung zusammenwirken und der zweite Spreizabschnitt durch einen Bereich vergrößerten Durchmesser gebildet ist. Durch die zweite Spreizzone, die in der Nähe des Kopfes angeordnet ist und in der zwei aufspreizbare Flügel vorhanden sind, ist es möglich, eine zusätzliche Befestigung auf dieser Dübelhöhe bzw. Dübeltiefe zu erreichen. An dem den Kopf gegenüberliegenden Ende in der ersten Spreizzone sind zwei Spreizbacken angeordnet, zwischen denen sich eine wellenlinienförmige Ausnehmung befindet. Die wellenlinienförmige Ausnehmung bildet an den Spreizbacken eine wellenlinienförmige Kontur, die eine Art Zähne an den Spreizbacken entstehen läßt. Diese Zähne haben den Vorteil, daß sie das Spreizelement auch im aufgespreizten Zustand der Spreizbacken auch im radialen Bereich der Spreizbacken führen können. So wie die Beute in dem Maul eines Krokodils seitlich nicht entweichen kann, weil die Krokodilzähne sie daran hindert, auch wenn das Maul teilweise geöffnet ist, so wird das Spreizelement in dem Dübel durch die Zähne geführt und gehalten. Zwar werden durch die auf unterschiedlicher Höhe angeordnete zweite Spreizzone die Befestigung bzw. die Befestigungseigenschaften verbessert und durch die wellenlinienförmige Ausnehmung die Führungseigenschaften verbessert, jedoch weiterhin nur unter Verwendung eines Spreizelementes, das zumindest in einem Bereich noch mit einem Gewinde versehen ist. Festzustellen ist bei diesem Dübel, daß die Länge der Spreizzone z.B. relativ gering ist. Je größer die Spreizzone bzw. der Spreizabschnitt gemacht wird, desto größer ist die Gefahr, daß das Spreizelement im Bereich der wellenlinigen Ausnehmung unerwünschter Weise heraustritt. Insbesondere gilt dies, wenn das Spreizelement ein nagelförmiges Spreizelement ohne Gewinde ist, das nur durch Hammerschläge positioniert wird und der Spreizabschnitt außerhalb des Mauerwerkes angeordnet werden soll.

Dieser Dübel weist zumindest im Bereich der Zähne einen Führungsinnenraum zur Führung eines Spreizelementes, wobei im Bereich des Spreizabschnittes Führungsmittel vorgesehen sind, die bei Aufspreizung des Dübels im Spreizabschnitt eine zusätzliche Führungswirkung erzielen.

Außerdem ist ein Stand der Technik bekannt, bei dem der Dübel ebenfalls mit einer wellenförmigen Ausnehmung bzw. Auslassung versehen ist, und im Bereich der Auslassung Querstege angeordnet sind, die beide Spreizbacken halten sollen. Diese Querstege haben jedoch nur Stabilisierungsaufgaben. Durch dieses Halten der Spreizbacken ist es möglich, daß der Spreizabschnitt wesentlich länger gemacht werden kann. Dieser Stand der Technik findet bereits Verwendung mit nagelartigen Spreizelementen ohne jegliches Gewinde.

Sowohl bei dem letztgenannten Stand der Technik als auch bei den Dübeln der DE19800581A1 wird die Spreizwirkung nur in zwei radiale Richtungen erreicht.

Bekannt sind auch Dübel mit vier Spreizbacken, wobei zwischen den Spreizbacken Auslassungen vorhanden sind und Querstege zwischen den Spreizbacken angeordnet sind. Diese Dübel haben den Vorteil, daß die Spreizung in vier radiale Richtungen erfolgen kann.

Weiterhin gehört ein Dübel der Firma Hilti, der mit der Bezeichnung "HRD-H 10/50" versehen ist, zum Stand der Technik. Dieser Dübel weist geschwungene Auslassungen auf, die derart angeordnet sind, daß sich der Dübel radial in deutlich mehrere Richtungen aufspreizen kann.

Aufgabe der vorliegenden Erfindung ist es, einen Dübel nach dem Oberbegriff des Anspruches 1 zu schaffen, der hinsichtlich seiner Führungs- und Befestigungseigenschaften gegenüber dem Stand der Technik verbessert ist.

Die Aufgaben der Erfindung wird durch den Gegenstand des Anspruchs 1 gelöst, während in den Unteransprüchen vorteilhafte Weiterbildungen der Erfindung gekennzeichnet sind.

Durch die Erfindung wird in verblüffend einfacher Weise erreicht, daß einerseits die Führungseigenschaften des Spreizelementes verbessert werden, andererseits die Befestigungseigenschaften soweit verbessert werden, daß der Dübel praktisch universell einsetzbar ist und darüber hinaus mehr als zwei radiale Spreizrichtungen erreicht werden, wobei die Herstellung auch noch mit einfachsten Werkzeugen möglich ist, wobei ferner ein kontrollierter Einzug der Druckplatte erfolgt, insbesondere bei Vollbaustoffverwendung.

Durch die Anordnung der Querstege und des Längssteges werden praktisch Führungsmittel geschaffen, die bei Aufspreizung des Dübels im Spreizabschnitt eine zusätzliche Führungswirkung erzielen, wobei die Querstege derart wechselseitig versetzt angeordnet oder derart bemessen sind, das sie zumindest während des Führungsvorganges des Spreizelementes die radialen Spreizzungen halten.

Der erfindungsgemäße Dübel weist durch einen derartigen Spreizabschnitt hervorragende Führungseigenschaften auf, wobei der Spreizabschnitt auch noch relativ lang ausgebildet werden kann. Die Befestigungseigenschaften werden weiterhin dadurch verbessert werden, daß der Dübel vier radiale Spreizzungen aufweist, wobei zwei longitudinale Stege angeordnet sind, die als zwei radiale Spreizzungen wirken. Hierdurch erhält der Dübel die Eigenschaften eines vierfach Spreizdübels.

Eine weitere vorteilhafte Ausführungsform ergibt sich, wenn die Querstege derart gestaltet sind, daß wenigstens einige von ihnen beim Einführen des Spreizelementes zerreißen.

Eine besonders kostengünstige Herstellung ergibt sich, wenn zwei senkrechte zu einer Werkzeugtrennebene sowie parallel zueinander verlaufende Auslassungspaare vorhanden sind, wobei die einzelnen Auslassungen spiegelsymmetrisch zur Werkzeugtrennebene angeordnet sind.

Ein vorteilhaftes Verfahren zur Befestigung von Isolierdämmmaterial ergibt sich, wenn der Dübel in einem Mauerwerk nur so weit eingelassen ist, wenn mindestens ein Drittel der Länge des Spreizabschnittes aus dem Mauerwerk herausragt. Durch ballonartiges Aufspreizen des Spreizabschnittes außerhalb des Mauerwerkes kann die Druckplatte in das Isoliermaterial eingeschlagen werden, ohne daß der Spreizabschnitt im Mauerwerk nachrutscht.

Anhand der folgenden Ausführungsbeispiele, in der weitere Vorteile und Merkmale der Erfindung beschrieben sind, wird die Erfindung gezeigt und erläutert. Es zeigt:
- Fig. 1: eine Darstellung eines Dübels mit seinem Spreizelement, der teilweise in dem Dübel eingeführt ist,
- Fig. 2: eine Darstellung des in Figur 1 gezeigten Dübels bei Anordnung in einem Mauerwerk mit zu befestigendem Isoliermaterial,
- Fig. 3: eine Darstellung, wie in Figur 2, jedoch mit bis zum Mauerwerk eingedrücktem Spreizelement,
- Fig. 4: eine Darstellung, wie in den Figuren 2 oder 3, wobei das Spreizelement fast vollständig eingeschlagen ist,
- Fig. 5: eine Darstellung, des Dübels wie in den vorangegangenen Figuren mit vollständig eingeschlagenem Spreizelement, wobei die Druckplatte im Isoliermaterial versenkt angeordnet ist.
- Fig. 6: eine vergrößerte Darstellung des Spreizabschnittes des Dübels ohne eine wechselseitige Anordnung der Querstege,
- Fig. 7: eine Darstellung des Spreizabschnittes einer anderen Ausführungsform, wobei wechselseitig dicke und dünne Stege angeordnet sind,
- Fig. 8: eine vergrößerte Darstellung des Spreizabschnittes des in den Figuren 1 bis 5 gezeigten Dübels, bei dem die Querstege wechselseitig angeordnet sind,
- Fig. 9: eine stark vergrößerte Darstellung der Ausführungsform gemäß der Figur 6,
- Fig. 10: eine stark vergrößerte Darstellung der Ausführungsform gemäß der Figur 7,
- Fig. 11: eine stark vergrößerte Darstellung der Ausführungsform gemäß der Figur 8,
- Fig. 12: eine Querschnittsdarstellung des Dübels im Spreizabschnitt in ungespreiztem Zustand und
- Fig. 13: eine Querschnittsdarstellung des Dübels in gespreiztem Zustand.

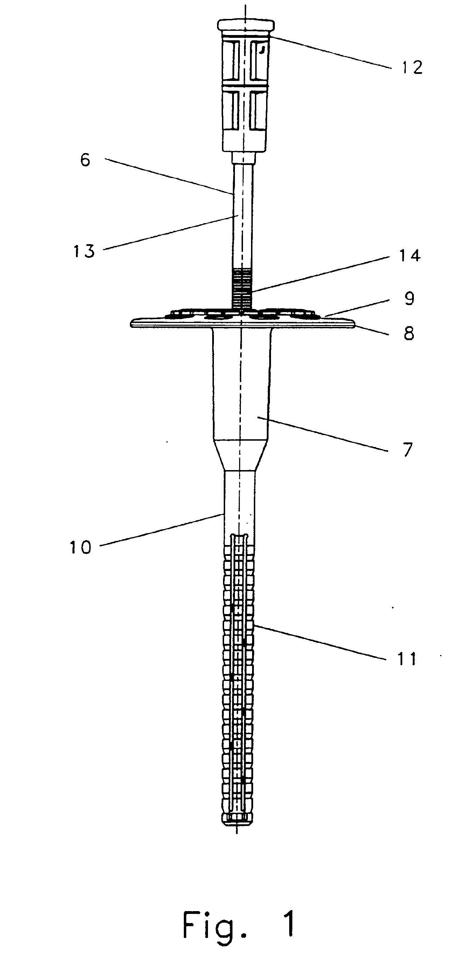

Die Figur 1 zeigt einen erfindungsgemäßen Dübel, der im wesentlichen aus einem Schaft 7, aus einem Kopf 8 mit einem schirmartig angeordneten Befestigungsteller bzw. einer Druckplatte 9, und aus einem Spreizabschnitt 11 besteht.

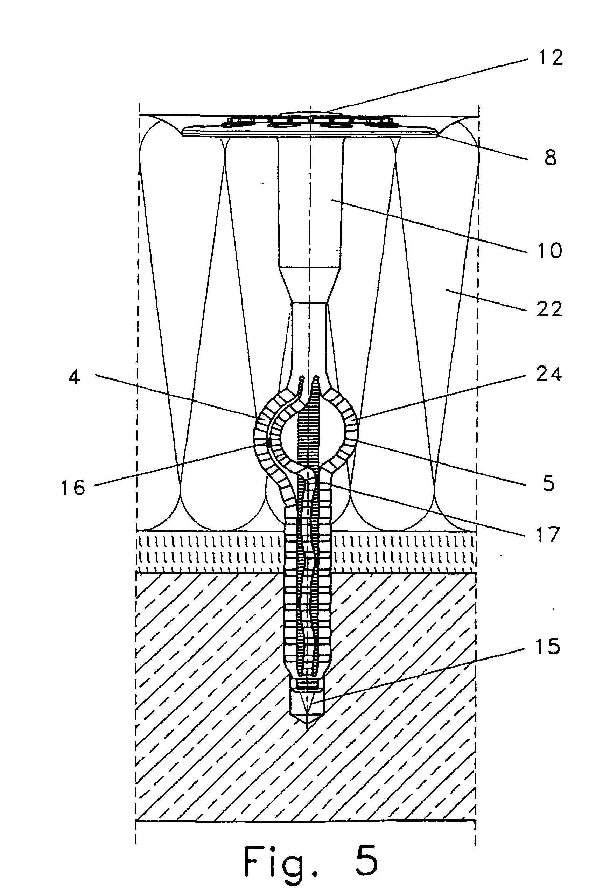

Der Schaft 7 (Hohlschaft) weist in der Nähe des Kopfes 8 einen größeren Durchmesser auf, als im Bereich des Spreizabschnittes 11. Wie deutlich in Figur 1 zu sehen ist, umfaßt der Spreizabschnitt 11 mehr als die Hälfte der Gesamtlänge des Dübels 10. Die Dübellänge beträgt etwa 13,5 cm. Die Länge des Spreizabschnittes beträgt etwa 7,5 cm. Das Spreizelement 6 ist in diesen Ausführungsbeispielen nagelförmig ohne einen Gewindeabschnitt. Es weist einen Nagelkopf 12 auf, der aus schlagfestem Material besteht und an einem Basiskörper 13 umspritzt ist. Das Spreizelement 6 weist einen geriffelten Nagelbereich 14 auf, der eine wesentliche Länge des Spreizelementes deckt und bis nahezu an das Nagelende reicht, das in der Figur 1 nicht zu sehen ist, aber in der Figur 5. Das Nagelende ist in der Figur 5 mit dem Bezugszeichen 16 versehen. Das Nagelende ist mit einer Nagelspitze versehen.

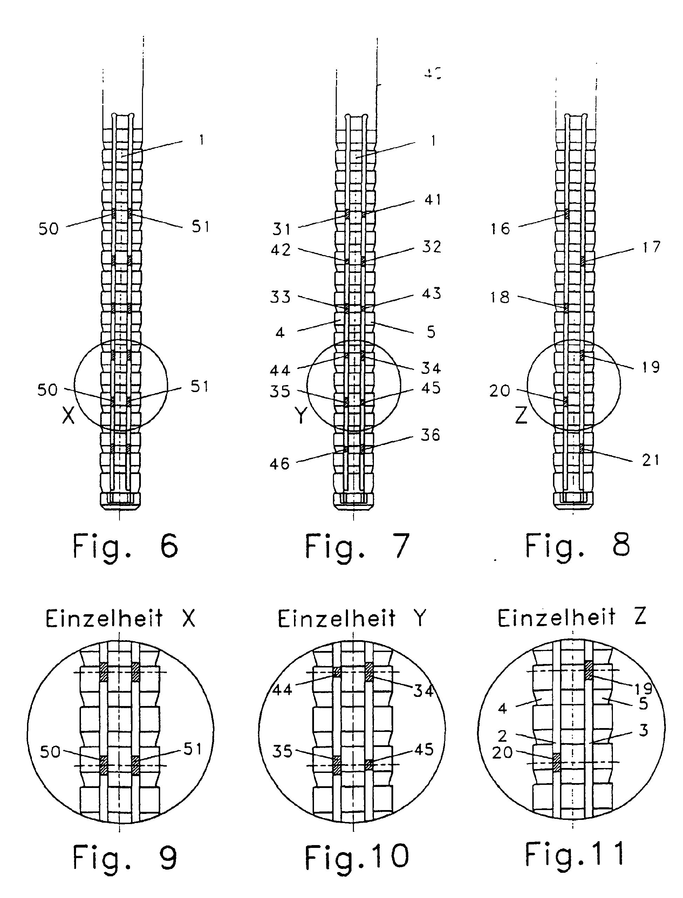

Wie in der Figur 11 gut zu erkennen ist, ist der Dübel 10 an seinem Spreizabschnitt 11 an der gezeigten Seite mit 2 schlitzartigen Ausnehmungen bzw. Auslassungen 2 und 3 versehen. Die Auslassungen 2 und 3 lassen einen Längssteg 1 entstehen. In der Figur 11 sind zwei Querstege 19 und 20 zu sehen, die in unterschiedlicher Höhe angeordnet sind, wobei der obere Quersteg 19 in der rechten Auslassung 3 und der untere Quersteg 20 in der linken Auslassung 2 angeordnet ist. Die Figur 11 zeigt zwei radiale Spreizzungen 4 und 5. Der Quersteg 19 ist mit dem Längssteg 1 und der radialen Spreizzunge 5 einstückig verbunden, während der etwas weiter unten angeordnete Verbindugssteg 20 mit der radialen Spreizzunge 4 und dem Längssteg 1 einstückig verbunden ist. Die Querstege 19 und 20 sind wechselseitig angeordnet. Man könnte auch sagen, daß die Verbindungslinie zwischen den Querstegen 19 und 20 diagonal verläuft. Bei vielen so angeordneten Querstegen könnte man sagen, daß die Verbindungslinie zickzackartig verläuft, wie Figur 8 veranschauchlicht. Die Figur 8 zeigt sechs Querstege 16 bis 21. Man könnte auch sagen, daß die Querstege 16 bis 21 jeweils versetzt angeordnet sind.

Beim Einschlagen des Spreizelementes 6, der einen größeren Durchmesser als der Querschnitt des Führungsinnenraumes in dem Spreizabschnitt aufweist, werden die radialen Spreizzungen 4 und 5 auseinander gedrückt, jedoch von den Querstegen 16 bis 21 gehalten. Dabei verformt sich der longitudinale Steg 1 wellenartig und wird in zwangsläufiger Weise geringfügig länger, weil das Material soweit elastisch ist. Die wechselseitige Anordnung der Querstege 16 bis 21 hat vor allem den Vorteil einer hervorragenden Führungseigenschaft des Spreizelementes. Er wird auch bei ungünstigen Bedingungen garantiert geführt, weil die Spreizzungen 4 und 5 auch bei impulsartigem Aufschlagen bzw. Einschlagen sich an das Spreizelement 6 andrücken und nicht radial nach außen geschleudert werden. Es gibt nämlich Mauerwerke mit Hohlräumen, bei denen die Spreizzungen 4 und 5 in den Lochbereichen frei liegen. Würden die radialen Spreizzungen 4 und 5 ohne Querstege frei liegen und zu weit nach außen geschleudert werden, könnte das Spreizelement viel leichter aus dem Dübel heraustreten.

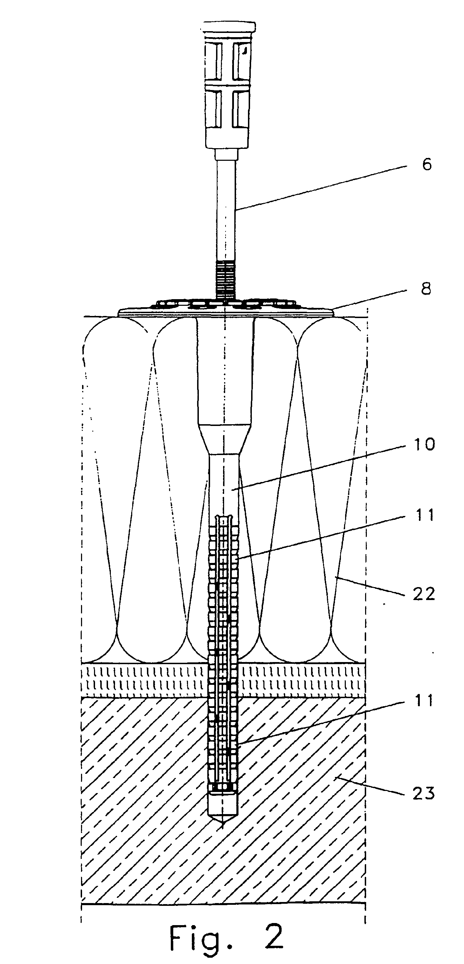

Bevor nun auf die Figuren 6 bis 10 Bezug genommen wird und eine weitere Ausführungsform näher erläutert wird, wird der Einschlagvorgang anhand der Figuren 2 bis 5 näher beschrieben.

Die Figur 2 zeigt zu befestigendes Isoliermaterial 22 mit einer erheblichen Dicke von 8 bis 10 cm. Darunter befindet sich das Mauerwerk 23, an dem das Isoliermaterial 22 befestigt werden soll. In das Mauerwerk ist bereits der Dübel 10 eingeführt, wobei das Isoliermaterial 22 von dem Dübel 10 durchdrungen worden ist. Der Kopf 8 liegt genau auf der Ebene, in der die Isolierung bzw. das Isoliermaterial 22 anfängt. Das Spreizelement 6 ist zwar in dem Dübel eingeführt, es hat aber noch nicht den Spreizabschnitt mit seiner Nagelspitze bzw. Nagelende 15 erreicht.

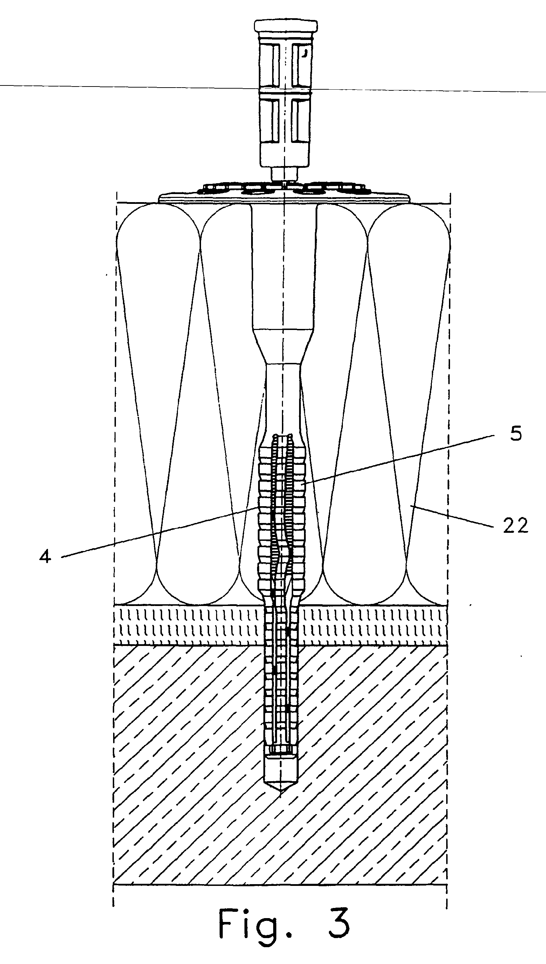

In der Figur 3 ist das Spreizelement 6 durch Hammerschläge auf den Nagelkopf bis zum Mauerwerk eingeschlagen worden. Obwohl im Bereich des Isoliermaterials 22 kaum Widerstand an den radialen Spreizzonen oberhalb des Mauerwerkes vorhanden ist, nimmt bzw. nehmen die Spreizzungen 4 und 5 keine bauchige Form an, sondern schmiegen sich praktisch, das Spreizelement berührend, an dem Basiskörper 13 an.

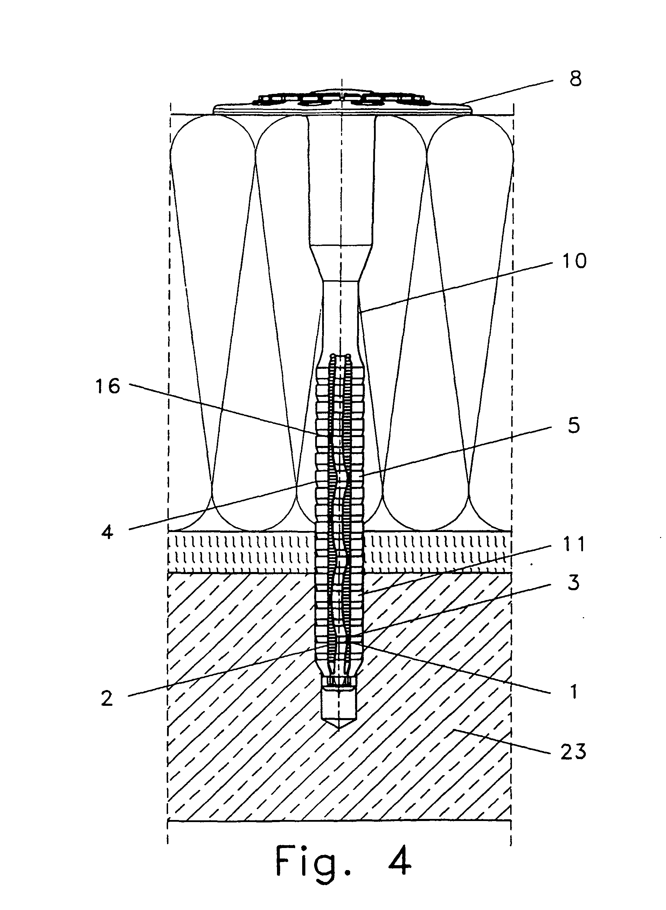

Wie die Figur 4 zeigt, wird bei weiterem Aufschlagen auf das Spreizelement 6 dieser nahezu vollständig eingeführt. In dieser Figur ist die wellenlinienförmige Verformung des Längssteges 1 besonders gut zu sehen, die durch die wechselseitige Anordnung der Querstege 16 bis 21 erfolgt.

Wenn der Nagelkopf 12 auf den Kopf 8 des Dübels 10 trifft und weitere Einschläge auf den Nagelkopf 12 eintreffen, dann senkt sich der Kopf 8 des Dübels 10 in das Isoliermaterial 22 ein, wie Figur 5 zeigt, wobei die radialen Spreizzungen 4 und 5 und der longitudinale Steg 1 im Bereich oder besser gesagt in einem Bereich des Isoliermaterials 22 eine bauchige Form annehmen, so als würde ein kleiner Ballon innen drin aufgeblasen. Das ist besonders gewünscht, weil so die Druckplatte 9 im Isoliermaterial 22 oberflächenbündig eingeschlagen werden kann, ohne daß der Spreizabschnitt im Mauerwerk nachrutscht. Wie in der Figur 5 zu sehen ist, bleibt der Quersteg 16 mit der radiale Spreizzunge 4 und dem Längssteg 1 verbunden.

Bei diesem Dübel 10 ist die Länge des Spreizabschnittes 11 derart bemessen, daß sich noch ein wesentlicher Bereich des Spreizabschnittes 11 in dem Isoliermaterial 22 bzw. oberhalb des Mauerwerkes 23 befindet.

Die Figuren 7 und 10 zeigen eine weitere Ausführungsform der Erfindung, bei der Querstege derart wechselseitig angeordnet oder bemessen sind, daß sie zumindest während des Führungsvorganges des Spreizelementes 6 die radialen Spreizzungen 4 und 5 halten.

Diese zweite, in Fig. 7 gezeigte, Ausführungsform des Dübels 40 weist dicke Querstege 31 bis 36 und dünne Querstege 41 bis 46 auf. Bei diesem Dübel 40 sind auf einer Querschnittsebene zumindest ein dicker Quersteg, beispielsweise 31, und ein dünner Quersteg, beispielsweise 41, angeordnet, die dünnen Querstege 41 bis 46 dienen als Sollbruchstellen. Die dicken Querstege 31 bis 36 bleiben bei Aufspreizung fest mit den radialen Spreizzungen 4 bzw. 5 und dem Längssteg 1 verbunden. Beim Einschlagen des Spreizelementes 6 reißen nach und nach die Stellen, an denen die dünnen Querstege 41 bis 46 angeordnet sind. Der longitudinale Steg 1 wird ebenso, wie bereits in Figur 5 gezeigt ist, wellenartig verformt.

In den Figuren 6 und 9 ist eine Ausführungsform gezeigt, in der die Querstege 50 und 51 nicht wechselseitig angeordnet sind. Der Quersteg 51 kann gegenüber dem Quersteg 50 jedoch mit anderen Materialeigenschaften versehen sein. Dies könnte beispielsweise durch ein Zweikomponenten-Spritzgußverfahren erfolgen, das ja hinreichend bekannt ist. D.h. der Quersteg 51 wäre mit anderen Materialeigenschaften versehen, als der Quersteg 50. Im Ergebnis würde sich der longitudinale Steg 1 ebenfalls wellenartig verformen, wenn die korrespondierenden Querstege zickzackartig, wie bereits erläutert, angeordnet wären.

Die Querstege (Figuren 6 und 7) können anstatt mit anderen Materialeigenschaften alternativ (nicht gezeigt) wechselseitig mit einer kleinen Bohrung als Schwächungszone versehen sein, damit die gebohrten Querstege zerreißen und sich der longitudinale Steg wellenlinienartig verformen kann .

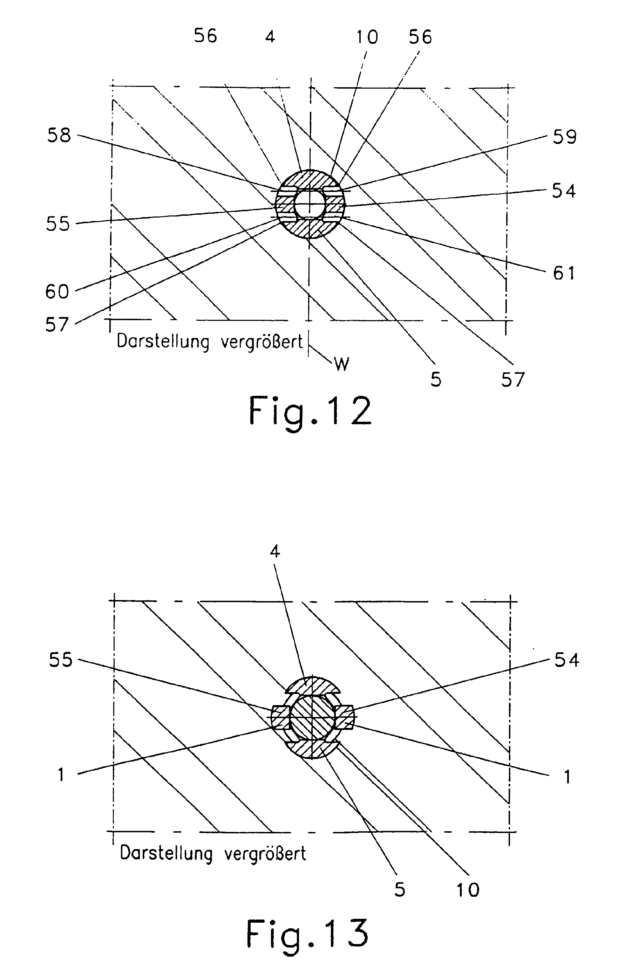

Die Figuren 12 und 13 zeigen den Dübel in gespreiztem und ungespreiztem Zustand. Wie zu erkennen ist, spreizen sich die radialen Spreizzungen 4 und 5 als auch die longitudinalen Stege 1 radial nach außen in vier radiale Richtungen.

Diese Ausführungsform ist besonders günstig herzustellen, da sie nur eine Werkzeugtrennebene W erfordert, d.h. es sind keine teuren Werkzeugkonstruktionen erforderlich. Zwischen den Längsstegen und den radialen Spreizzungen 4 bzw. 5 sind Auslassungen 58, 59, 60, 61 bzw. Auslassungspaare 56, 57 vorhanden. Wie in den Figuren 12 und 13 zu erkennen ist, sind zwei senkrecht zur Werkzeugtrennebene W und parallel zueinander verlaufende Auslassungspaare 56, 57 vorhanden, wobei die einzelnen Auslassungen 58, 59, 60, 61 spiegelsymmetrisch zur Werkzeugtrennebene W angeordnet sind.

Die vorstehende Erfindung ist nicht nur auf diese Ausführungsformen beschränkt, sondern umfaßt auch alle anderen gleichwirkenden Ausführungsformen. So können die Querstege durch eine durchgehende Schicht ersetzt werden, die mal dick und mal dünn bemessen ist, wobei die Schicht entlang der gesamten Länge des Spreizabschnittes angeordnet ist.

### Liste der Bezugszeichen:

- 1: Längssteg
- 2: Auslassung
- 3: Auslassung
- 4: Radiale Spreizzunge
- 5: Radiale Spreizzunge
- 6: Spreizelement
- 7: Schaft
- 8: Kopf
- 9: Druckplatte
- 10: Dübel
- 11: Spreizabschnitt
- 12: Nagelkopf
- 13: Basiskörper
- 14: Nagelbereich
- 15: Nagelende
- 16: Erster Quersteg
- 17: Zweiter Quersteg
- 18: Dritter Quersteg
- 19: Vierter Quersteg
- 20: Fünfter Quersteg
- 21: Sechster Quersteg
- 22: Isoliermaterial
- 23: Mauerwerk
- 24: Ballonartige Stelle
- 31-36: Dicke Querstege
- 41-46: Dünne Querstege
- 50: Querstege
- 51: Querstege
- 54: Radiale Spreizzungen
- 55: Radiale Spreizzungen
- 56: Auslassungspaar
- 57: Auslassungspaar
- 58-61: Auslassungen

## Patentansprüche

1. Dübel (10) mit einem Kopf (8), der eine Druckplatte (9) umfaßt, und mit einem Hohlschaft (7), der an den Kopf (8) anschließt, zum Einführen eines Spreizelementes (6), wobei der Hohlschaft (7) mindestens einen Spreizabschnitt (11) aufweist,
wobei der Spreizabschnitt (11) mindestens einen Längssteg (1) zwischen zwei Auslassungen (2,3) und zwei radiale Spreizzungen (4,5) umfaßt, wobei der Längssteg (1) durch jeweils eine Auslassung (2,3) von jeweils einer radialen Spreizzunge (4,5) getrennt ist, und wobei der Längssteg (1) durch mindestens jeweils einen Quersteg (16,18,20; 17,19,21; 31-36; 41-46; 50,51) mit radialen Spreizzungen (4,5) verbunden ist,
**dadurch gekennzeichnet, daß**
die Querstege (16-21; 31-36; 41-46; 50,51) in Längsrichtung des Spreizabschnitts (11) derart wechselseitig versetzt angeordnet sind oder derart bemessen sind, daß der Längssteg (1) beim Einführen des Spreizelementes (6) wellenlinienartig verformbar ist.

2. Dübel nach Anspruch 1, **dadurch gekennzeichnet, daß** der Dübel zwei Längsstege (1) und vier radiale Spreizzungen (4, 5, 54, 55) aufweist.

3. Dübel nach einem der vorhergehenden Ansprüche, **dadurch gekennzeichnet, daß** die Querstege (16-21; 31-36) derart gestaltet sind, daß sie beim Einführen des Spreizelementes (6) nicht zerreißen.

4. Dübel nach einem der Ansprüche 1 oder 2, **dadurch gekennzeichnet, daß** die Querstege (41-46; 50,51) derart gestaltet sind, daß wenigstens einige von ihnen beim Einführen des Spreizelementes (6) zerreißen.

5. Dübel nach einem der vorhergehenden Ansprüche, **dadurch gekennzeichnet, daß** zwei senkrecht zu einer Werkzeugtrennebene (W) und parallel zueinander verlaufende Paare von Auslassungen (56,57) vorhanden sind, wobei die einzelnen Auslassungen (58, 59, 60, 61) spiegelsymmetrisch zur Werkzeugtrennebene (W) angeordnet sind.

6. Verwendung eines Dübels nach einem der vorhergehenden Ansprüche zur Befestigung von Wärmedämmplatten (22) an einem Mauerwerk (23).

7. Befestigungssystem mit einem Dübel (10) nach einem der Ansprüche 1 bis 5 und einem nagelartigen Spreizelement (6).

8. Verfahren zur Befestigung von Wärmedämmplatten (22) an einem Mauerwerk (23) mit Hilfe eines Dübels (10) nach einem der Ansprüche 1 bis 5, **dadurch gekennzeichnet, daß** der Dübel (10) in das Mauerwerk (23) nur soweit eingelassen wird, daß mindestens ein Drittel der Länge des Spreizabschnitts (11) des Dübels (10) aus dem Mauerwerk (23) herausragt.

9. Verfahren nach Anspruch 8, **dadurch gekennzeichnet, daß** zumindest ein Bereich des Spreizabschnittes (11) derart ballonartig verformbar ist, daß eine axiale Stauchung des Dübels (10) eintritt, wobei die Druckplatte (9) kontrolliert in die Wärmedämmplatten (22) eingeschlagen werden kann.

## Claims

1. Dowel (10) having a head (8), which includes a pressing plate (9) and having a hollow shaft (7), which is attached to the head (8), for inserting a spreading element (6), wherein the hollow shaft (7) comprises at least a spreading section (11),
wherein the spreading section (11) includes at least one longitudinal bar (1) between two recesses (2,3) and two radial spreading tongues (4,5), wherein the longitudinal bar (1) is separated by means of respectively one recess (2,3) from respectively one radial spreading tongue (4,5) and wherein the longitudinal bar (1) is connected by at least respectively one transverse bar (16,18,20; 17,19,21; 31-36; 41-46; 50,51) with radial spreading tongues (4,5),
**characterized in that**
the transverse bars (16-21; 31-36; 41-46; 50,51) are arranged in the longitudinal direction of the spreading section (11) alternating in such a way or are dimensioned in such a way that the longitudinal bar (1) is deformable during insertion of the spreading element (6) in sinuous line fashion.

2. Dowel according to claim 1, **characterized** that the dowel comprises two longitudinal bars (1) and four radial spreading tongues (4,5, 54, 55).

3. Dowel according to one of the preceding claims, **characterized** that the transverse bars (16-21; 31-36) are formed in such a way, that they do not tear apart during insertion of the spreading element (6).

4. Dowel according to one of the claims 1 or 2, **characterized** that the transverse bars (41-46; 50,51) are formed in such a way, that at least some of them tear apart during insertion of the spreading element (6).

5. Dowel according to one of the preceding claims, **characterized** that two pairs of recesses (56,57) are provided which run perpendicular to the tool separation plane (W) and which run parallel to each other, wherein the individual recesses (58,59,60,61) are arranged mirror symmetrical with regard to the tool separation plane (W).

6. Use of a dowel according to one of the preceding claims for mounting insulating panels (22) at a brickwork (23).

7. Mounting system with a dowel (10) according to one of claims 1 to 5 and with a nail-like spreading element (6).

8. Method for mounting of insulating panels (22) at a brickwork (23) by means of the dowel (10) according to one of claims 1 to 5, **characterized in that** the dowel (10) is brought into the brickwork (23) only so far, that at least a third of the length of the spreading section (11) of the dowel (10) protrudes from the brickwork (23).

9. Method according to claim 8, **characterized** that at least one area of the spreading section (11) is deformable in a balloon like manner such that an axial compression of the dowel (10) occurs, wherein the pressing plate (9) maybe driven into the insulating panels (22) in a controlled manner.

## Revendications

1. Cheville (10) munie d'une tête (8), qui comprend une plaque d'appui (9), et d'une tige creuse (7) raccordée à la tête (8) pour introduire un élément d'expansion (6), la tige creuse (7) comportant au moins une portion expansible (11), la portion expansible (11) comprenant au moins une nervure longitudinale (1) entre deux évidements (2, 3) et deux languettes expansibles radiales (4, 5), la nervure longitudinale (1) étant séparée de chacune des languettes expansibles radiales (4, 5) par un évidement (2, 3), et la nervure longitudinale (1) étant reliée à chacune des languettes expansibles radiales (4, 5) par au moins une nervure transversale (16, 18, 20 ; 17, 19, 21 ; 31-36 ; 41-46 ; 50, 51), **caractérisée en ce que** les nervures transversales (16-21 ; 31-36 ; 41-46 ; 50, 51) sont disposées avec un décalage alterné dans la direction longitudinale de la portion expansible (11) ou sont dimensionnées de façon que, lors de l'introduction de l'élément d'expansion (6), la nervure longitudinale (1) soit déformable sous forme de ligne ondulée.

2. Cheville selon la revendication 1, **caractérisée en ce que** la cheville comporte deux nervures longitudinales (1) et quatre languettes expansibles radiales (4, 5, 54, 55).

3. Cheville selon une des revendications précédentes, **caractérisée en ce que** les nervures transversales (16-21 ; 31-36) sont conçues de façon à ne pas rompre lors de l'introduction de l'élément d'expansion (6).

4. Cheville selon une des revendications 1 ou 2, **caractérisée en ce que** les nervures transversales (41-46 ; 50, 51) sont conçues de façon qu'au moins certaines d'entre elles rompent lors de l'introduction de l'élément d'expansion (6).

5. Cheville selon une des revendications précédentes, **caractérisée en ce qu'**il est prévu deux paires d'évidements (56, 57) qui s'étendent perpendiculairement à un plan de séparation d'outil (W) et parallèlement l'une à l'autre, les évidements individuels (58, 59, 60, 61) étant disposés selon une symétrie en miroir par rapport au plan de séparation d'outil (W).

6. Utilisation d'une cheville selon une des revendications précédentes pour fixer des panneaux calorifuges (22) à une maçonnerie (23).

7. Système de fixation comprenant une cheville (10) selon une des revendications 1 à 5 et un élément d'expansion en forme de clou (6).

8. Procédé de fixation de panneaux calorifuges (22) à une maçonnerie (23) à l'aide d'une cheville (10) selon une des revendications 1 à 5, **caractérisé en ce que** la cheville (10) n'est enfoncée dans la maçonnerie (23) que sur une distance permettant à au moins un tiers de la longueur de la portion expansible (11) de la cheville (10) de dépasser de la maçonnerie (23).

9. Procédé selon la revendication 8, **caractérisé en ce qu'**au moins une zone de la portion expansible (11) est déformable sous forme de ballonnet, de façon à créer un écrasement axial de la cheville (10), la plaque d'appui (9) pouvant être enfoncée dans les panneaux calorifuges (22) par une percussion contrôlée.
